# EUROPÄISCHE PATENTSCHRIFT

(11) **EP 0 841 213 B1**
(45) Veröffentlichungstag und Bekanntmachung des Hinweises auf die Patenterteilung: **05.12.2001**
(21) Anmeldenummer: 97111405.3
(22) Anmeldetag: 05.07.1997
(51) Int. Cl.: B60N 3/08

(54) **Fahrzeugascher**
Vehicle ash tray
Cendrier pour véhicule

(30) Priorität: 09.09.1996 DE 19636528
(43) Veröffentlichungstag der Anmeldung: 13.05.1998
(73) Patentinhaber: fischerwerke Artur Fischer GmbH & Co. KG, 72178 Waldachtal (DE); DaimlerChrysler AG, 70567 Stuttgart (DE)
(72) Erfinder: Ziegler, Christiane, Dipl.-Ing. (FH), 72176 Waldachtal (DE); Dettling, Roland, 72160 Horb a/N (DE); Schenk, Bernd, Dipl.-Ing., 72160 Horb a/N (DE); Nienhaus, Ulrich, Dipl.-Ing., 72202 Nagold-Hochdorf (DE)

(56) Entgegenhaltungen:
- DE-A- 2 105 032
- DE-A- 3 040 203
- DE-A- 3 310 658
- DE-A- 3 614 804
- DE-A- 3 939 498
- GB-A- 2 209 656

## Beschreibung

Die vorliegende Erfindung betrifft einen Fahrzeugascher gemäß dem Oberbegriff des Hauptanspruchs.

Fahrzeugascher sind beispielsweise aus der den Oberbegriff des 1. Anspruchs beinhaltenden DE 3 939 498, der DE 30 40 203 A1 und der DE 33 10 658 A1 bekannt. Bei beiden Aschern handelt es sich um quer eingebaute Fahrzeugascher, die eine einem Gehäuse entnehmbare Schublade zur Entleerung aufweisen. Der Ascher gemäß der DE 30 40 203 A1 ist in der Weise ausgestaltet, daß ein verbesserter Schutz des Amaturenbretts und gleichzeitig eine gute Zugänglichkeit des Aschenbechers auch bei nur teilweise herausgezogenem Aschenbehälter erreicht wird. Bei dem Ascher gemäß der DE 33 10 658 A1 handelt es sich speziell um einen Ascher vornehmlich für eine Rücklehnenrückwand eines Fahrzeugsitzes mit zusätzlichen Ausrüstungsteilen in Form von Haltegriffen, Garderobehaken, Trinkbecherhaltern oder dgl..

Insbesondere bei der Anordnung im Bereich des Armaturenbretts steht einerseits relativ wenig Platz für den Ascher zur Verfügung und andererseits soll bei herausgezogenem Ascher auch der Zugriff auf darunter liegende zu bedienende Einheiten möglich sein.

Der vorliegenden Erfindung liegt daher die Aufgabe zugrunde, einen Fahrzeugascher vorzuschlagen, der auch in der geöffneten Stellung den Zugriff zu darunterliegenden Bedienelementen ermöglicht und die Funktionsweise gegenüber bekannten Fahrzeugaschern verbessert.

Diese Aufgabe wird erfindungsgemäß durch einen Fahrzeugascher mit den Merkmalen des Hauptanspruchs gelöst. Weitere vorteilhafte Ausgestaltungen sind den Unteransprüchen zu entnehmen.

Der erfindungsgemäß ausgestaltete Fahrzeugascher ist danach mit einem Anschlag versehen, so daß die Ascherschublade in einer halboffenen Stellung verharrt und erst nach der Überwindung eines Widerstandes in die offene Endstellung bewegbar ist. Dies ermöglicht den Einbau des Aschers sowohl in Quer- als auch in Längsrichtung, da in der halboffenen Stellung die unterhalb des Aschers angeordneten Bedienelemente des Fahrzeugs weiterhin zugänglich sind. Nach der Überwindung des Widerstandes erfolgt die Bewegung in die offene Endstellung, in der beispielsweise ein in der Ascherschublade angeordnete Aschenaufnahme zum Entleeren entnommen werden kann. Gemäß einer bevorzugten Ausbildung wird der Anschlag durch zwei parallel angeordnete Federelemente, die jeweils eine einander zugewandte abgewinkelte Anschlagfläche für eine an der Ascherschublade angebrachte Anschlagnase, die zwischen den Federelementen bewegbar ist, gebildet. Bei der Weiterbewegung der Ascherschublade aus der halboffenen Stellung werden die Federelemente durch die Anschlagnase nach außen gedrückt und dadurch der Weg für die Ascherschublade freigegeben. Vorteilhafterweise verläuft die Anschlagnase in einer Ausnehmung des Gehäuses und die Federelemente sind einstückig mit einem Rahmen verbunden, der zwei gegenüber angeordnete torbogenähnliche Abwinklungen aufweist, die den Durchtritt der Anschlagnase erlauben. Dieser Aufbau ermöglicht die platzsparende Führung und Arretierung der Anschlagnase in der halboffenen und vollständig geöffneten Stellung. Darüber hinaus wird auf elegante Art und Weise die Freigabe durch Überwindung eines Widerstandes ermöglicht.

Gemäß einer weiteren bevorzugten Ausbildung wird der Aschenaufnahmebereich in der Ascherschublade, beispielsweise ein Aschenbechereinsatz, sowohl in der halboffenen als auch in der offenen Stellung beleuchtet. Vorteilhafterweise erfolgt die Beleuchtung mit einem Lichtleiter, wobei zweckmäßigerweise in einer weiteren Ausbildung ein fest mit dem Gehäuse verbundener Doppel-Lichtleiter vorgesehen ist, der in Auszugsrichtung der Ascherschublade an zwei unterschiedlichen Stellen endet, um die Ascherschublade in der halboffenen und der offenen Stellung zu beleuchten. Damit wird in beiden Auszugsstellungen der Ascherschubladen eine störunanfällige Beleuchtung realisiert.

Um die Ascherschublade aufgrund des geringen Platzangebots noch weiter auszunutzen, befindet sich gemäß einer weiteren bevorzugten Ausbildung an der Stirnseite der Ascherschublade eine Klappe, hinter der ein Münzhalter angeordnet ist.

Der gesamte Aufbau und die Anordnung der Ascherschublade in dem Gehäuse ist somit funktionssicher und platzsparend. Vorzugsweise ist die rechteckig ausgebildete Aschenaufnahme in Form eines Aschenbechers in Längsrichtung einschiebbar in der Ascherschublade angeordnet. Vorteilhafterweise erfolgt die Bewegung der Ascherschublade mittels einer Rollfeder, damit auch hier platzsparend und funktionssicher das Herausbewegen der Ascherschublade aus dem Gehäuse sichergestellt ist.

Durch die Erfindung wird somit eine praxisgerechte und kostengünstige Lösung für einen Fahrzeugascher mit der Möglichkeit eines zusätzlichen Münzhalters realisiert.

Nachfolgend wird die Erfindung anhand eines Ausführungsbeispiels in Verbindung mit den begleitenden Zeichnungen näher erläutert. Es stellen dar:
- Figur 1: die perspektivische Ansicht eines Fahrzeugaschers in Verbindung mit einem Ablagefach bei geschlossenem Ascher;
- Figur 2: eine Seitenansicht des Fahrzeugaschers im Schnitt mit dem Fahrzeugascher in der geschlossenen und der vollständig geöffneten Stellung;
- Figur 3: die Unterseite des Fahrzeugaschers und
- Figur 4: den Fahrzeugascher mit dem geöffneten Münzhalter.

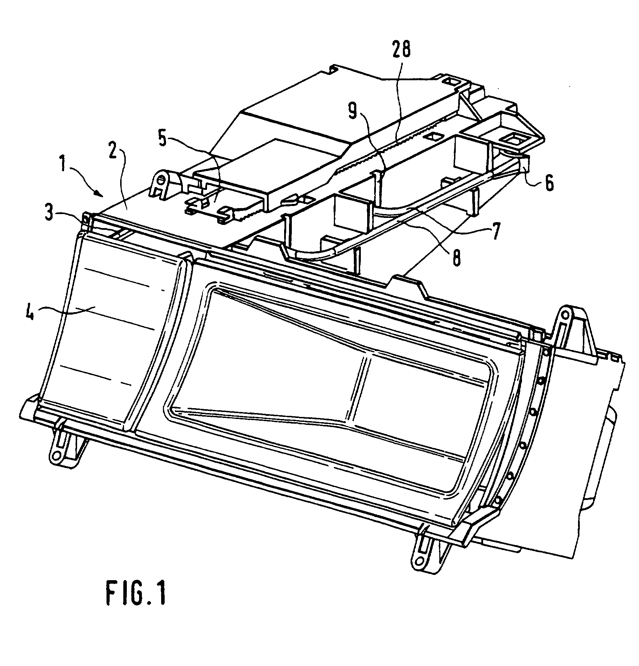

Bei dem in Figur 1 dargestellten Fahrzeugascher 1 ist das Gehäuse 2 mit der darin beweglichen Ascherschublade 3 ersichtlich. Durch Druck auf die Klappe 4 der Ascherschublade 3 bewegt sich die Ascherschublade aufgrund einer eingebauten Push-Push-Mechanik und der Rollfeder 5 aus der geschlossenen Stellung heraus. Parallel zu dem Gehäuse 2 ist ein fest mit dem Gehäuse verbundener Doppellichtleiter 6 angeordnet, der aus einem kürzeren und einem längeren abgewinkelten Lichtleiter 7 beziehungsweise 8 besteht. Die Lichtleiter 7,8 erreichen die Ascherschublade 3 über in dem Gehäuse angeordnete Schlitze 9, wobei der kürzere Lichtleiter 7 in der halboffenen Stellung und der längere Lichtleiter in der offenen Stellung die Ascherschublade 3 beleuchtet.

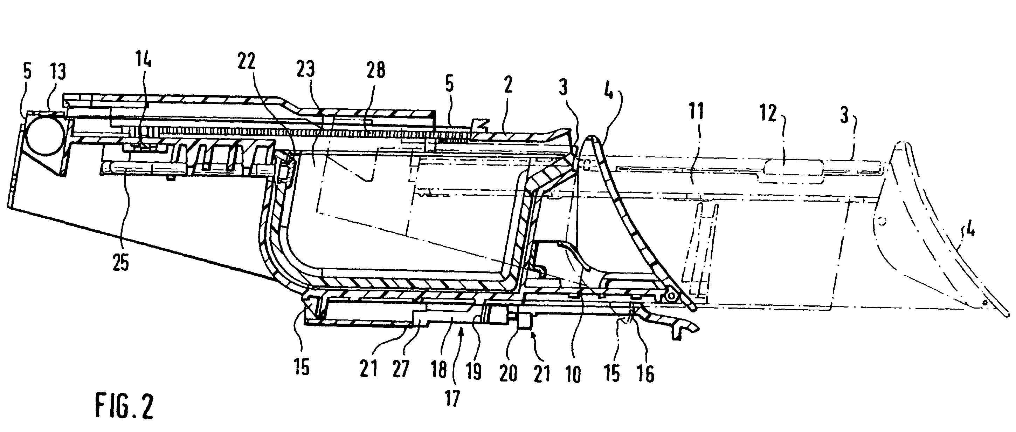

In Figur 2 ist die Ascherschublade im Schnitt in der Grundstellung ausgezogen und in der offenen Stellung gestrichelt dargestellt. Aus ihr ist widerum die geschlossene Klappe 4 mit dem dahinter angeordneten Münzhalter 10 ersichtlich. In der Schublade befindet sich eine herausnehmbare Aschenaufnahme 11, die jedoch nur im vollständig geöffneten Zustand zwecks Entleerung herausnehmbar ist. An der Aschenaufnahme 11 befindet sich beidseitig ein Eingriff 12 der einerseits zum Herausnehmen der Aschenaufnahme 11 als auch zum Ziehen der Ascherschublade 3 zwecks Überwindung des Widerstandes aus der halboffenen in die geöffnete Stellung Verwendung findet. Die Figur 2 zeigt außerdem die Rollfeder 5, die in einem Schutzgehäuse 13 angeordnet ist. Zur Dämpfung ist an der Ascherschublade 3 ein Rotationsdämpfer 14 angebracht, der in eine Zahnstange 28 eingreift.

Unterhalb der Ascherschublade ist die Anschlagnase 15 ersichtlich, die in der geöffneten Stellung an einer querverlaufenden Anschlagkante 16 an dem Gehäuse 2 anschlägt. Desweiteren befindet sich an der Unterseite des Gehäuses 3 der Anschlag 17 für die halboffene Stellung. Dieser besteht aus zwei parallel verlaufenden Federelementen 18 mit einander zugewandten abgewinkelten Anschlagflächen 19. Die Federelemente 18 sind einstückig mit einem Metallrahmen 20 verbunden, der für den Durchtritt der Anschlagnase 15 auf ihrem Weg von der geschlossenen Stellung in die geöffnete Stellung zwei torbogenähnliche Abwinklungen 21 aufweist.

Aus Figur 2 ist außerdem ein an der rückseitigen Wand der Aschenaufnahme 11 angeordnetes Fenster 22 ersichtlich, durch das über einem Lichtleiter 25 das von den Lichtleitern gelieferte Licht in den Aschenraum 23 gelangen kann.

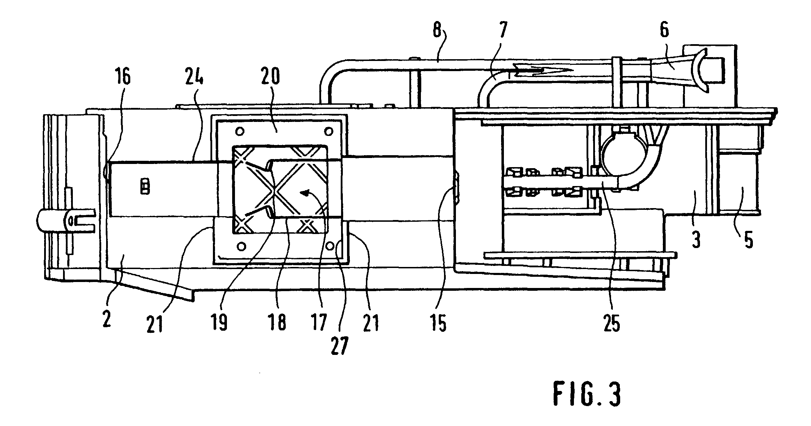

Die Ansicht des Fahrzeugaschers 1 von unten gemäß Figur 3 verdeutlicht noch einmal den in Verbindung mit Figur 2 erläuterten Anschlag 17 für die halboffene Stellung. Die Anschlagnase 15 bewegt sich in einer länglichen Ausnehmung 24 des Gehäuses 2 und der ersten Abwinklung 21 hindurch bis zu den Anschlagflächen 19 der Federelemente 18. Aufgrund einer Zugbewegung an der Ascherschublade spreizen sich die Federelemente 18 auf, sobald der durch sie gebildete Widerstand überwunden ist. Infolgedessen bewegt sich die Ascherschublade unter Einfluß der Rollfeder 5 in die offene Stellung. Dabei bewegt sich die Anschlagnase 15 unter der zweiten torbogenähnlichen Abwinklung 21 hindurch und in der Ausnehmung 24 weiter bis zu der Anschlagkante 16. Aus dieser Figur ist auch der Rahmen 20 ersichtlich, der einstückig über die Seitenwände 27 der torbogenähnlichen Abwinklungen 21 mit den Federelementen 18 verbunden ist.

Über den in der Ascherschublade 3 angeordneten Lichtleiter 25 (vgl. auch Figur 2) wird die Verbindung zwischen dem Fenster 22 und dem Lichtleiter 7 beziehungsweise 8 in der halboffenen beziehungsweise geöffneten Stellung hergestellt.

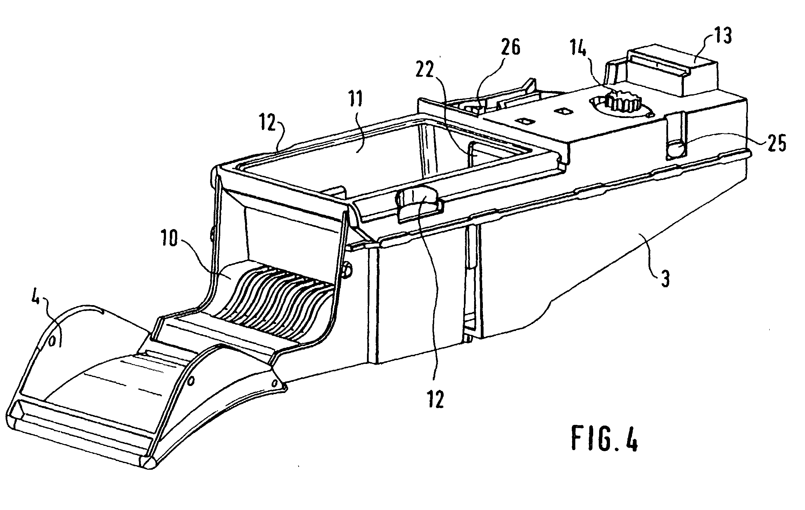

Figur 4 zeigt in perspektivischer Ansicht die Ascherschublade 3 mit geöffneter Klappe 4 und dahinter angeordnetem Münzhalter 10. In der Ascherschublade 3 befindet sich eine herausnehmbare Aschenaufnahme 11 mit den vorstehend erwähnten Eingriffen 12. Das in der rückwärtigen Wand der Aschenaufnahme 11 angeordnete Fenster 22 ist mit dem Lichtleiter 25 verbunden. Das Schutzgehäuse 13 dient der Aufnahme der Rollfeder, die, wie in Figur 1 gezeigt, mit dem Gehäuse 2 verbunden ist. An der Ascherschublade 3 befindet sich in bekannter Art und Weise der bereits erwähnte Rotationsdämpfer 14 sowie eine Herzkurve 26 für die bekannte Push-Push-Mechanik.

Sowohl Ascherschublade 3 als auch Gehäuse 2 sind aus Kunststoff gefertigt.

## Patentansprüche

1. Fahrzeugascher (1) mit einem Gehäuse (2) zur Befestigung am Fahrzeug und einer in dem Gehäuse (2) geführten Ascherschublade (3), die durch die Kraft einer Feder (5) aus einer geschlossenen Grundstellung, in der sie verriegelt ist, in eine offene Stellung verfahrbar ist, **dadurch gekennzeichnet, daß** ein Anschlag (17) vorgesehen ist, sodaß die Ascherschublade (3) in einer halboffenen Stellung verharrt und erst nach der Überwindung eines Widerstandes in die offene Endstellung bewegbar ist.

2. Fahrzeugascher nach Anspruch 1, **dadurch gekennzeichnet, daß** der Anschlag (17) durch zwei parallel angeordnete Federelemente (18) gebildet ist, die jeweils eine einander zugewandte abgewinkelte Anschlagfläche (19) für eine an der Ascherschublade (3) angebrachte Anschlagnase (15), die zwischen den Federelementen (18) bewegbar ist, aufweisen.

3. Fahrzeugascher nach Anspruch 2, **dadurch gekennzeichnet, daß** die Anschlagnase (15) in einer Ausnehmung (24) des Gehäuses (2) verläuft und die Federelemente (18) einstückig mit einem Rahmen (20) verbunden sind, der zwei gegenüber angeordnete torbogenähnliche Abwinklungen (21) aufweist, die den Durchtritt der Anschlagnase (15) erlauben, wobei die Federelemente (18) in den Rahmen (20) hineinragend mit den Seitenwänden (27) der Abwinklungen (21) verbunden sind.

4. Fahrzeugascher nach Anspruch 1, **dadurch gekennzeichnet, daß** die Aschenaufnahme (11) in der Ascherschublade (3) sowohl in der halboffenen als auch in der offenen Stellung beleuchtet ist.

5. Fahrzeugascher nach Anspruch 4, **dadurch gekennzeichnet, daß** die Beleuchtung mittels Lichtleiter (7, 8, 25) erfolgt.

6. Fahrzeugascher nach Anspruch 5, **dadurch gekennzeichnet, daß** ein fest mit dem Gehäuse (3) verbundener Doppel-Lichtleiter (6) vorgesehen ist, der in Auszugsrichtung der Ascherschublade (3) an zwei unterschiedlichen Stellen endet, um die Ascherschublade in der halboffenen und in der offenen Stellung zu beleuchten.

7. Fahrzeugascher nach Anspruch 1, **dadurch gekennzeichnet, daß** an der vorderen Stirnseite der Ascherschublade (3) eine Klappe (4) angeordnet ist, hinter der sich ein Münzhalter (10) befindet.

8. Fahrzeugascher nach Anspruch 1, **dadurch gekennzeichnet, daß** die rechteckig ausgebildete Aschenaufnahme (11) in Längsrichtung in das Gehäuse (2) einschiebbar in der Ascherschublade (3) angeordnet ist.

9. Fahrzeugascher nach Anspruch 1, **dadurch gekennzeichnet, daß** die Ascherschublade (3) mittels einer Rollfeder (5) bewegt wird.

## Claims

1. Vehicle ashtray (1) having a housing (2) for fastening to the vehicle and guided in the housing (2) an ashtray drawer (3), which is movable by the force of a spring (5) from a closed basic position, in which it is locked, to an open position, **characterised in that** a stop member (17) is provided, so that the ashtray drawer (3) remains in a half-open position and is movable into the open end position only after overcoming a resistance.

2. Vehicle ashtray according to claim 1, **characterised in that** the stop member (17) is formed by two parallel arranged spring elements (18), each of which has an angled stop face (19), which stop faces are arranged facing each other, for a stop projection (15) mounted on the ashtray drawer (3) and movable between the spring elements (18).

3. Vehicle ashtray according to claim 2, **characterised in that** the stop projection (15) runs in a recess (24) of the housing (2) and the spring elements (18) are joined in one piece to a frame (20), which has two oppositely disposed archway-like bent portions (21) which permit passage of the stop projection (15), the spring elements (18) projecting into the frame (20) being connected to the side walls (27) of the bent portions (21).

4. Vehicle ashtray according to claim 1, **characterised in that** the ash receptacle (11) in the ashtray drawer (3) is illuminated in both the half-open and in the open position.

5. Vehicle ashtray according to claim 4, **characterised in that** the illumination is effected by means of light guides (7, 8, 25).

6. Vehicle ashtray according to claim 5, **characterised in that** a double light guide (6) fixedly connected to the housing (3) is provided, which, in the direction in which the ashtray drawer (3) is pulled out, terminates at two different points in order to illuminate the ashtray drawer in the half-open and in the open position.

7. Vehicle ashtray according to claim 1, **characterised in that** on the front end face of the ashtray drawer (3) there is disposed a flap (4), behind which there is arranged a coin-holder (10).

8. Vehicle ashtray according to claim 1, **characterised in that** the rectangular ash receptacle (11) is arranged in the ashtray drawer (3) so as to be longitudinally slidable into the housing (2).

9. Vehicle ashtray according to claim 1, **characterised in that** the ashtray drawer (3) is moved by means of a coiled spring (5).

## Revendications

1. Cendrier pour véhicule (1) équipé d'un boîtier (2) pour la fixation sur le véhicule et d'un tiroir à cendrier (3) guidé dans le boîtier (2), qui peut être déplacé par la force d'un ressort (5) à partir d'une position de base fermée, dans laquelle il est verrouillé, dans une position ouverte, **caractérisé en ce qu'**une butée (17) est prévue, de sorte que le tiroir à cendrier (3) reste dans une position semi-ouverte et ne peut être déplacé dans la position finale ouverte qu'après avoir surmonté une résistance.

2. Cendrier pour véhicule selon la revendication 1, **caractérisé en ce que** la butée (17) est formée par deux éléments de ressort (18) disposés en parallèle, qui présentent respectivement des surfaces de butée (19) coudées et tournées l'une vers l'autre pour un nez de butée (15) disposé sur le tiroir à cendrier (3), qui peut être déplacé entre les éléments à ressort (18).

3. Cendrier pour véhicule selon la revendication 2, **caractérisé en ce que** le nez de butée (15) est agencé dans un évidement (24) du boîtier (2) et les éléments à ressort (18) sont reliés d'un seul tenant à un cadre (20), qui présente deux parties coudées (21) en forme d'arc de porte et disposées face à face, qui permettent le passage du nez de butée (15), les éléments de ressort (18) étant reliés aux parois latérales (27) des parties coudées (21) en dépassant dans le cadre (20).

4. Cendrier pour véhicule selon la revendication 1, **caractérisé en ce que** le logement des cendres (11) dans le tiroir à cendrier (s3) est éclairé aussi bien dans la position semi-ouverte que dans la position ouverte.

5. Cendrier pour véhicule selon la revendication 4, **caractérisé en ce que** l'éclairage s'effectue au moyen de guides optiques (7, 8, 25).

6. Cendrier pour véhicule selon la revendication 5, **caractérisé en ce qu'**il est prévu un double guide optique (6) relié de façon fixe au boîtier (3), qui se termine dans le sens d'extraction du tiroir à cendrier (3) en deux endroits différents, afin d'éclairer le tiroir à cendrier dans la position semi-ouverte et dans la position ouverte.

7. Cendrier pour véhicule selon la revendication 1, **caractérisé en ce que** sur le côté frontal du tiroir à cendrier (3) est disposé un clapet (4) derrière lequel se trouve un support à monnaie (10).

8. Cendrier pour véhicule selon la revendication 1, **caractérisé en ce que** le logement des cendres (11) conçu de façon rectangulaire est disposé dans le tiroir à cendrier (3) de façon à pouvoir être introduit dans le boîtier (2) dans le sens de la longueur.

9. Cendrier pour véhicule selon la revendication 1, **caractérisé en ce que** le tiroir à cendrier (3) est déplacé au moyen d'un ressort à galet (5).
